# EUROPÄISCHE PATENTSCHRIFT

(11) **EP 0 397 156 B1**
(45) Veröffentlichungstag und Bekanntmachung des Hinweises auf die Patenterteilung: **11.10.1995**
(21) Anmeldenummer: 90108766.8
(22) Anmeldetag: 10.05.1990
(51) Int. Cl.: D02G 1/08, D01H 7/92, D01H 7/00, C04B 41/91, C04B 35/10, C04B 35/48

(54) **Bauteil aus gesinterter polykristalliner Keramik, Verfahren zu seiner Herstellung sowie Verfahren zum Falschdrallen von Synthesegarn unter Verwendung des Bauteils**
Structural element of sintered polycrystalline ceramic, process for its production and process for false twisting of synthetic yarn by using this structural element
Elément structural de céramique frittée polycristalline, procédé de sa production et procédé de fausse torsion de fil synthétique en utilisant cet élément structural

(30) Priorität: 12.05.1989 DE 3915558
(43) Veröffentlichungstag der Anmeldung: 14.11.1990
(73) Patentinhaber: CERASIV GmbH INNOVATIVES KERAMIK-ENGINEERING, D-73207 Plochingen (DE)
(72) Erfinder: Kalbe, Gerald, D-7310 Plochingen (DE); Fripan, Michael, Dr., D-7150 Backnang (DE); Weber, Hans-Dieter, D-7300 Esslingen (DE)
(74) Vertreter: Schulz, Wilfried, Dipl.-Ing.

(56) Entgegenhaltungen:
- DE-A- 2 505 337
- DE-A- 3 025 596
- DE-A- 3 122 522
- DE-A- 3 506 691
- DE-C- 2 708 204

## Beschreibung

Die vorliegende Erfindung betrifft ein Bauteil aus gesinterter polykristalliner Keramik zum Einsatz als Fadenleit- oder Bearbeitungsorgan in textilen Garnherstellungs- und -verarbeitungsmaschinen mit einer zur Einstellung der erforderlichen Maßgenauigkeit nach dem Sintern vorgenommenen mechanischen Nachbearbeitung der Oberfläche mittels Schleifen und/oder Läppen und/oder Polieren.

In Chemiefasern/Textilindustrie (1975) Band 25, Heft 3, S. 263 - 265, berichtete Dworak über:
Werkstoffeigenschaften von Aluminiumoxid-Fadenleitorganen im Vergleich zu anderen Werkstoffen. Die dort genannten Forderungen:
fadenfreundliche Oberflächenbeschaffenheit
definiertes Fadenreibungsverhalten
Verschleißfestigkeit
Korrosionsbeständigkeit
Bruchfestigkeit
Maßhaltigkeit
Formenvielfalt
treffen auch noch heute zu.

Zur Erzielung einer fadenfreundlichen Oberflächenbeschaffenheit wurde gemäß der vorstehenden Literaturstelle "eine homogen ausgebildete Oberfläche, die aus einzelnen Kuppen im gleichen Höhenniveau ohne scharfe Kanten besteht", angesehen. Von Dworak wurde auch bereits darauf hingewiesen, daß von der "Pflastersteinstruktur bis zur polierten Fläche" alle Übergänge möglich sind. Schließlich weist die Literaturstelle darauf hin, daß Fadenleitorgane, die mit natürlicher Oberfläche geliefert werden, nicht die gleiche Formgenauigkeit haben können, wie ein durch Schleifen, Läppen oder Polieren bearbeitetes Teil. Zu den Fadenleitorganen mit bearbeiteter Oberfläche, die mit hoher Präzision hergestellt werden können, werden die rotationssymmetrischen Teile gerechnet. Die in dieser Literaturstelle beschriebene Problematik kann somit dahingehend zusammengefaßt werden, daß bei den bekannten Fadenleitorganen, wozu insbesondere die in den entsprechenden Maschinen fest eingebauten Ösen, Haken und Sauschwanzfadenführer zu zählen sind, die natürliche Oberfläche mit ihrer sogenannten Pflastersteinstruktur erhalten werden konnte, da eine Nacharbeitung hier nicht erforderlich war. Anderseits muß bei den rotationssymmetrischen Präzisionsbauteilen ein Verlust der natürlichen Oberfläche in Kauf benommen werden, da es zum Erhalt der notwendigen Formgenauigkeit unumgänglich ist, diese Bauteile durch Schleifen, Läppen oder Polieren nachzubearbeiten.

Zu den durch Schleifen oder Läppen entstehenden Nachteilen gibt die DE-A- 22 47 056 an, daß in unregelmäßigen Abständen Körner aus der Oberfläche herausgerissen werden, so daß scharfkantige Löcher entstehen, die zu Beschädigungen des Fadens führen. Zur Überwindung der bestehenden Nachteile sieht die DE-A- 22 47 056 einen vorzugsweise als Streckstift einzusetzenden Fadenführer aus Aluminiumoxid mit unbearbeiteter Oberfläche vor, die ein Oberflächengefüge aus stark abgeflachten Kristalliten aufweist. Diese Struktur soll durch den Formgebungs- und Sinterprozeß gesteuert werden. Weil eine zu starke Fadenabbremsung befürchtet wird, wird von einer Kopfsteinpflasterstruktur mit stark abgerundeten Körnern abgeraten.

Gemäß der DE-C- 27 08 204 wurde bereits vorgeschlagen, bei einer aus gesintertem Aluminiumoxid bestehenden Friktionsscheibe die Friktionsflächen im Bereich des Fadeneinlaufes und des Fadenablaufes so zu bearbeiten, daß unterschiedliche Oberflächenrauhigkeiten ausgebildet werden. Durch den im Bereich des Fadenablaufes geringeren Rauhigkeitswert sollte dabei die Fadenschädigung weitestgehend reduziert werden. Obwohl hiermit bereits eine geringere Fadenbeschädigung erzielt werden konnte, reichen die erzielten Verbesserungen noch nicht aus, insbesondere tritt noch ein zu starkes "glazing" auf, unter dem ein aus dem Fadenabrieb resultierendes Zusetzen der Scheiben mit dem auch als "Schnee" bezeichneten Abrieb verstanden wird.

In der DE-A- 27 16 283 wird eine Friktions-Texturiervorrichtung mit eine keramische Reibfläche aufweisenden Friktionsscheiben beschrieben. Die mit dem Garn in Berührung kommende Oberfläche der Friktionsscheibe soll eine Oberflächenrauhigkeit im Bereich zwischen 1^{s} und 6^{s}, vorzugsweise in einem Bereich zwischen mehr als 3^{s} und höchstens 6^{s} aufeisen. Das Keramikmaterial soll vorzugsweise aus einem Material mit einem durchschnittlichen Partikeldurchmesser im Bereich zwischen 2 und 30 µm hergestellt sein, wobei die Oberfläche mit Diamantstaub behandelt werden soll. Lt. JIS B 0601-1976 entspricht die vorstehend genannte Rauhigkeit einem Rauhtiefenwert von 1 bis 6 µm, vorzugsweise 3 bis 6 µm.

Die DE-A- 25 05 337 betrifft eine Friktionsscheibe, deren Garnkontaktfläche aus anorganischem Werkstoff mit einer bestimmten Oberflächentextur besteht. Die Friktionsscheiben sind entweder feste Keramikscheiben oder Metallscheiben mit einem darauf aufgebrachten hochtemperaturbeständigen Belag, der vorzugsweise durch Flammspritzen eines feuerfesten Metalloxids aufgebracht wird. Die Oberfläche kann nach beliebigen bekannten Bearbeitungsverfahren poliert werden.

Schließlich betrifft die US-Patentschrift 37 87 229 einen für die Herstellung von Fadenführern vorgesehenen Werkstoff mit niedrigem Reibungskoeffizienten, bei dem kugelförmige Partikel in eine beispielsweise aus Metall oder Kunststoff bestehende Matrix eingebettet sind. Dieser Vorschlag hat sich für mit hoher Umfangsgeschwindigkeit laufende Friktionsscheiben, bei denen ein gewisser Reibungskoeffizient zu Erzeugung des Falschdralles erforderlich ist, nicht durchsetzen können. Die relativ groben Partikelgrößen, die in dieser Schrift offenbart sind, lassen den Schluß zu, daß lediglich sehr hohe Mittenrauhwerte einstellbar sind. Außerdem können die Oberflächen der Partikel selbst eine rauhe Oberfläche aufweisen. Daneben besteht die Gefahr, daß die relativ groben Partikel nicht fest genug in die aus Metall oder Kunststoff bestehende Matrix eingebunden sind, so daß sie sich bei den hohen Umfangsgeschwindigkeiten lockern und zu einer Beschädigung des Fadenmaterials führen können.

Von der Anmelderin selbst werden neben einer Vielzahl von als Fadenleitorgan einzusetzenden Bauteilen, wie Haken und Ösen, Friktionsscheiben hergestellt, deren Oberflächen an den Garnkontaktflächen einen Mittenrauhwert Rₐ im Bereich von ca. 0,3 bis 1 µm aufweisen.

Der gemeinsame Nachteil der bekannten Bauteile besteht darin, daß infolge der vorgenommenen mechanischen Bearbeitung und der dabei entstandenen scharfen Kanten ein zu hoher Fadenabrieb entsteht. Als Folge des Fadenabriebs ergeben sich Filamentbrüche, ein ungleichmäßiges Anfärben und ein nicht gleichmäßiges Garnvolumen.

Um die bestehenden, insbesondere die durch die mechanische Nachbearbeitung entstehenden, Nachteile zu überwinden, hat sich die vorliegende Erfindung die Aufgabe gestellt, ein durch mechanische Nachbearbeitung maßgenau bearbeitetes Bauteil aus gesinterter polykristalliner Keramik, das zum Einsatz als Friktionsscheibe oder als Scheiben- oder Tellerbremse in textilen Garnherstellungs- und -verarbeitungsmaschinen dienen kann, zur Verfügung zu stellen, bei dem unter Beibehaltung der bekannten Vorteile ein deutlich verringertes Abriebverhalten des zu verarbeitenden Fadens bewirkt wird, wobei gleichzeitig das sogenannte "glazing" unter dem das Zusetzen der Scheibe mit Verunreinigungen verstanden wird, verringert wird. Eine weitere Aufgabe sieht die Erfindung in der Entwicklung von Verfahrensmaßnahmen zur Herstellung der verbesserten Bauteile. Darüberhinaus liegt der Erfindung die Aufgabe zugrunde, ein Verfahren zum Falschdrallen von Synthesegarn unter Verwendung des Bauteils zur Verfügung zu stellen.

Zur Lösung dieser Aufgabe sieht die Erfindung bei einem Bauteil gemäß dem Gattungsbegriff der Patentansprüche 1 bis 3 deren kennzeichnende Merkmale vor. Vorteilhafte Ausführungsformen sind in den Patentansprüchen 4 bis 7, Verfahren zur Herstellung in den Patentansprüchen 8 bis 10 und Verfahren zum Falschdrallen von Synthesegarn unter Verwendung eines Bauteils im Patentanspruch 11 angegeben.

Die Erfindung bewirkt einen deutlich verringerten Fadenabrieb - weniger Schnee - und gestattet trotzdem die Beibehaltung des in der eingangs zitierten Literaturstelle beschriebenen Anforderungsprofils an Fadenleit- oder Bearbeitungsorgane, wobei gleichzeitig das "glazing" erheblich verringert wird. Unter den in den Merkmalen d) und e) von Patentanspruch 1 verwendeten Begriffen "vertieft ausgebildete Korngrenzen" und "abgerundete freie Kornspitzen" soll verstanden werden, daß die Korngrenzen ähnlich wie die Narbung einer Orangenschale etwas tiefer als das übrige Niveau liegen, während der Begriff abgerundete freie Kornspitzen die zur mechanisch bearbeiteten Oberfläche gerichteten Kornbereiche meint, jene Kornbereiche also, die auf dem zur Oberfläche gerichteten Teil ihres Umfangs keine Korngrenze gegenüber den benachbarten Körnern aufweisen. Vorzugsweise ist das Bauteil aus hochreinem Aluminiumoxid (einer Reinheit von mehr als 99 Gew.%) hergestellt, wobei der Rest auf unvermeidbare Verunreinigungen entfällt. Sinterhilfsmittel, wie MgO, werden in einer Menge bis 1 Gew.% und Farbgeber, wie z.B. Cr₂O₃, MnO, Co₃O₄ und TiO₂, in einer Menge bis zu max. 4 Gew.% zugegeben. Ein solches Bauteil weist vorteilhaft eine mittlere Korngröße im Bereich von 4 bis 10 µm, ganz besonders bevorzugt von 6 bis 8 µm auf.

Eine weitere bevorzugte Ausführungsform sieht als Werkstoff eine sogenannte Dispersionskeramik aus Al₂O₃/ZrO₂ mit einem Anteil des ZrO₂ von maximal 10 Gew.% vor. Die Korngröße liegt hier bevorzugt bei < 4 µm. Für ein lediglich aus ZrO₂ bestehendes Bauteil ist bevorzugt ein ZrO₂ vom TZP-Typ vorgesehen, d.h. ein aus tetragonalen Zirkonoxidpartikeln mit einer Korngröße < 2 µm bestehender Werkstoff. Die zu verwendenden Werkstoffe sollen vorzugsweise im Rahmen der vorliegenden Erfindung eine Porosität von nicht mehr als 2,5 % aufweisen, bei einer Dispersionskeramik kann die Porosität bis zu 4,5 % betragen.

In Abhängigkeit von der nach dem Sinterprozeß ausgebildeten Oberfläche des Bauteils ist die Art des mechanischen Nachbearbeitungsprozesses auszuwählen, d.h. eine relativ starke Bearbeitung wird man durch Schleifen und eine geringfügigere Bearbeitung durch Läppen vornehmen. Die nach der mechanischen Bearbeitung erzielte Oberflächentextur bedingt wiederum den Grad der thermischen oder chemischen Ätzung. Die thermische Ätzung ist dabei eine bevorzugte Verfahrensmaßnahme, weil die gewünschte Oberflächentextur hierbei besonders genau eingestellt werden kann. Die chemische Ätzmethode bietet dagegen den Vorteil, nur besonders wichtige Stellen des Bauteils behandeln zu können oder unterschiedliche Ätzungen an einem Bauteil anzubringen. Weitere Ätzmethoden sind die Behandlung mittels Ionenstrahl oder das Plasmaätzen, wobei diese Verfahren aber aus wirtschaftlichen Gesichtspunkten weniger interessant erscheinen. Bei der thermischen Ätzung wird man die Temperatur vorzugsweise 100 bis 200 °C unterhalb der Sintertemperatur wählen. Gegebenenfalls wird die thermische Ätzung bei einer Temperatur von mehr als 1100 °C während mindestens 5 h durchgeführt. Von den beim chemischen Ätzprozeß verwandten Ätzmitteln ist konzentrierte Phosphorsäure besonders bevorzugt, wobei bei einer Temperatur zwischen 200 und 250 °C und einer Ätzdauer von 1 bis 5 Minuten geätzt wird. Weitere geeignete Ätzmittel sind die Schmelzen von K₂S₂O₄, V₂O₅ und Borax. Als besonders geeignet hat sich im Rahmen der vorliegenden Erfindung eine Friktionsscheibe erwiesen, die aus einem Werkstoff aus Aluminiumoxid unter Zusatz der üblichen Sinterhilfsmittel besteht. Eine solche Friktionsscheibe hat eine mittlere Korngröße im Bereich von 6 bis 8 µm, hat die erforderliche Maßgenauigkeit durch eine mechanische Nachbearbeitung in Form von Schleifen erhalten und ist thermisch geätzt. Der Mittenrauhwert Rₐ liegt im Bereich von 1,1 bis 1,3 µm und der gemittelte Rauhtiefenwert R_{z} liegt bei 7 bis 10 µm. Der an einer solchen erfindungsgemäßen Friktionsscheibe gemessene Tragflächenanteil beträgt über 30 %.

Dagegen hat sich ein als Scheiben- oder Tellerbremse ausgebildetes Bauteil als besonders geeignet gezeigt, bei dem eine Nachbearbeitung durch Läppen erfolgte und der Mittenrauhwert Rₐ zwischen 0,8 und 1,2 µm liegt.

Nachfolgend wird die Erfindung anhand von rasterelektronenmikroskopischen Aufnahmen näher erläutert.

Die Figuren 1a und 1b zeigen die Oberfläche eines Bauteils aus Aluminiumoxid in 300- bzw. 2000-facher Vergrößerung im Anschluß an einen üblichen Schleifprozeß.

Die Figuren 2a und 2b zeigen die Oberfläche des gleichen Bauteils nach thermischer Ätzung.

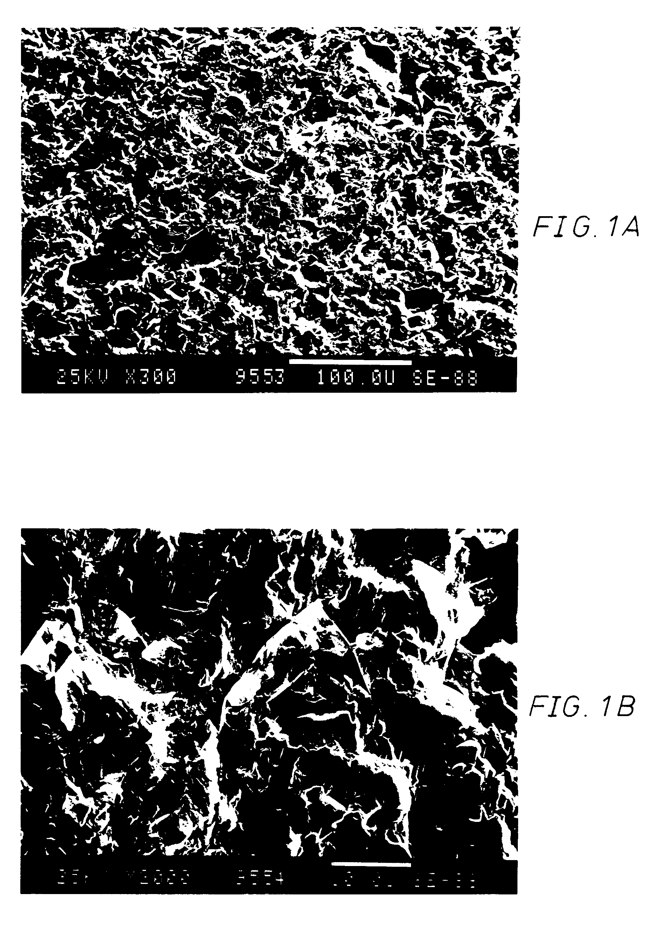

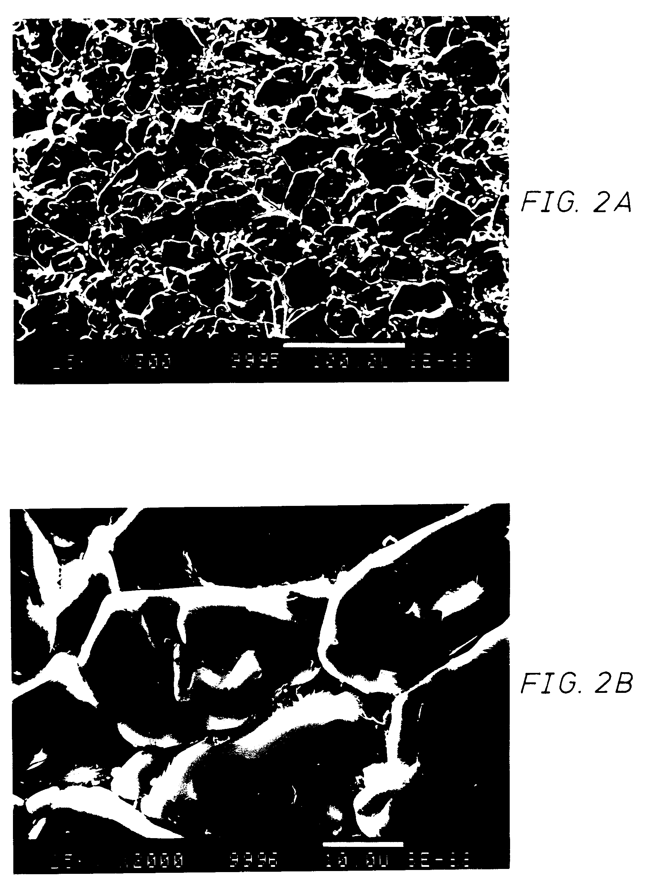

Aus dem Vergleich zwischen den Figuren 1b und 2b wird deutlich erkennbar, daß die thermische Ätzung zu einer deutlichen Verminderung der beim Schleifprozeß entstandenen scharfen Zacken und Kanten geführt hat, so daß jetzt die Kornspitzen abgerundet und die Korngrenzen vertieft ausgebildet erscheinen.

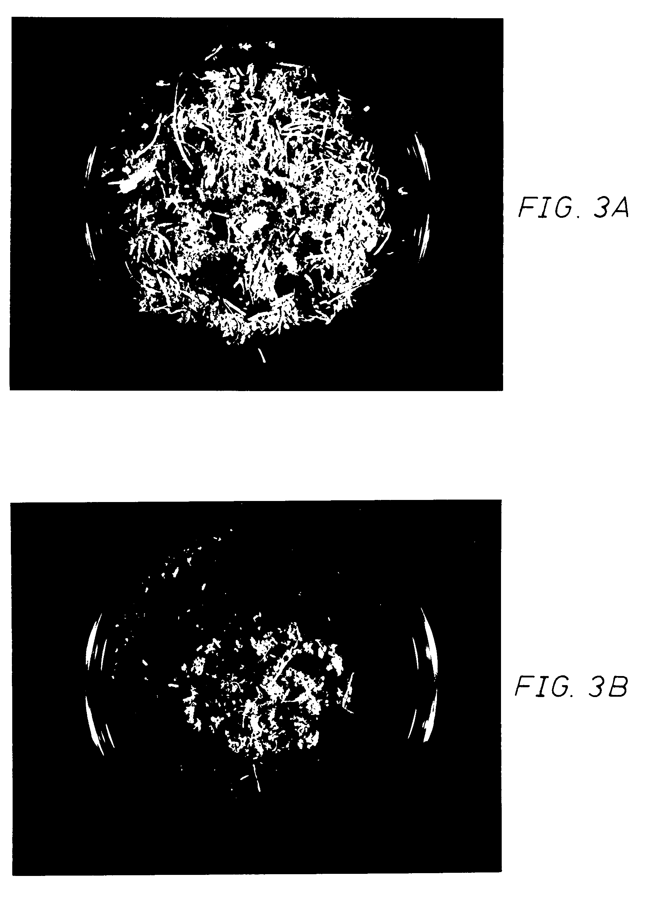

Die Figuren 3a und 3b zeigen die Fadenabriebsmenge jeweils nach 6 Stunden Einsatz einer Friktionsscheibe entsprechend der zu den Figuren 1a/b beschriebenen Ausführungsform (Figur 3a) und einer baugleichen Friktionsscheibe entsprechend den Figuren 2a/b (Figur 3b). Dabei ist deutlich erkennbar, daß mit der erfindungsgemäß ausgebildeten Friktionsscheibe nach den Figuren 2a/b eine wesentlich geringere Fadenabriebsmenge resultiert.

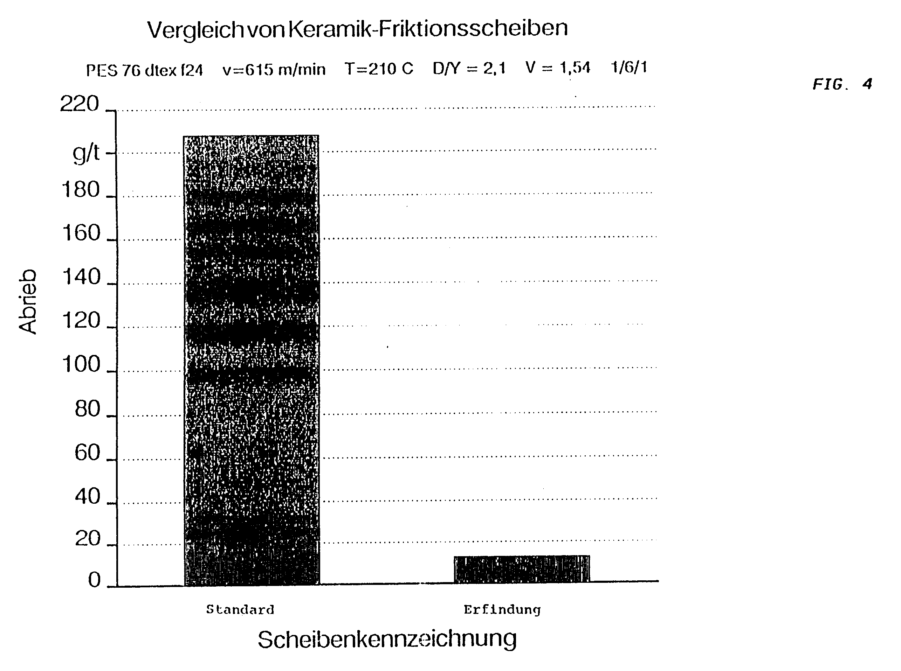

Figur 4 zeigt einen Vergleich zwischen einer erfindungsgemäßen Friktionsscheibe und einer Standard-Friktionsscheibe hinsichtlich des Faserabriebs je t Garn. Dabei ist deutlich erkennbar, daß mit der erfindungsgemäßen Friktionsscheibe ein wesentlich verringerter Faserabrieb (Schnee) erzielt wird.

Wie aus Figur 4 zu entnehmen ist, wurde ein Polyestergarn von 76 DTEX und 24 Filamenten eingesetzt, das bei einer Temperatur von 210 °C mit einer Geschwindigkeit von 615 m/min und einem Verstreckungsgrad von 1,54 bearbeitet wurde. D/Y = 2,1 bezeichnet die Umfangsgeschwindigkeit der Scheibe im Verhältnis zur Fadengeschwindigkeit.

Der vorstehende Vergleichsversuch mit den zuvor aufgeführten Parametern wurde unter Verwendung einer Friktionsfalschdrallvorrichtung mit der Scheibenkonfiguration 1/6/1 durchgeführt. Als Ein- und Auslaufscheibe der Friktionsfalschdrallvorrichtung wurden polierte Keramikscheiben eingesetzt.

Das erfindungsgemäße Verfahren zum Falschdrallen von Synthesegarn ist besonders für Polyester- und Polyamidgarne, insbesondere für Polyestergarne geeignet. Dabei werden zwischen Ein- und Auslaufscheibe drei bis neun Friktionsscheiben entsprechend der vorliegenden Erfindung angeordnet, wobei sechs Scheiben besonders bevorzugt sind.

## Patentansprüche

1. Bauteil aus gesinterter, polykristalliner Keramik, zum Einsatz als Fadenleit- oder Bearbeitungsorgan, **dadurch gekennzeichnet**, daß
a) die Oberfläche des Bauteils zumindest an den für den Fadenkontakt vorgesehenen Bereichen durch chemische oder thermische Ätzung erzielbare vertieft ausgebildete Korngrenzen und abgerundete freie Kornspitzen aufweist, wobei die chemische oder thermische Ätzung im Anschluß an die mechanische Nachbearbeitung durchgeführt wird und daß
b) diese Oberfläche über einen Mittenrauhwert Rₐ von 0,3 bis 1,5 µm verfügt.

2. Friktionsscheibe für eine ineinandergreifende, Scheiben aufweisende Friktionsfalschdrallvorrichtung aus gesinterter, polykristalliner Keramik, **dadurch gekennzeichnet**, daß
a) die Oberfläche der Friktionsscheibe zumindest an den für den Fadenkontakt vorgesehenen Bereichen durch chemische oder thermische Ätzung erzielbare vertieft ausgebildete Korngrenzen und abgerundete freie Kornspitzen aufweist, wobei die chemische oder thermische Ätzung im Anschluß an die mechanische Nachbearbeitung durchgeführt wird und daß
b) diese Oberfläche über einen Mittenrauhwert Rₐ von 0,3 bis 1,5 µm verfügt.

3. Scheiben- oder Tellerbremse für Textilmaschinen aus gesinterter, polykristalliner Keramik, **dadurch gekennzeichnet**, daß
a) die Oberfläche der Scheiben- oder Tellerbremse zumindest an den für den Fadenkontakt vorgesehenen Bereichen durch chemische oder thermische Ätzung erzielbare vertieft ausgebildete Korngrenzen und abgerundete freie Kornspitzen aufweist, wobei die chemische oder thermische Ätzung im Anschluß an die mechanische Nachbearbeitung durchgeführt wird und daß
b) diese Oberfläche über einen Mittenrauhwert Rₐ von 0,3 bis 1,5 µm verfügt.

4. Gegenstand nach einem der Ansprüche 1 bis 3, **dadurch gekennzeichnet**, daß es aus Aluminiumoxid, Zirkonoxid oder einer Mischung dieser Werkstoffe besteht.

5. Gegenstand nach einem der Ansprüche 1 bis 4, **dadurch gekennzeichnet**, daß es Magnesiumoxid, Chromoxid, Manganoxid, Kobaltoxid und/oder Titanoxid enthält.

6. Gegenstand nach einem der Ansprüche 4 oder 5, **gekennnzeichnet** durch eine durch Schleifen vorgenommene Nachbearbeitung und einem Mittenrauhwert Rₐ von 1,1 bis 1,3 µm.

7. Gegenstand nach einem der Ansprüche 3 bis 5, **gekennzeichnet** durch eine durch Läppen vorgenommene Nachbearbeitung und einen Mittenrauhwert Rₐ von 0,8 bis 1,2 µm.

8. Verfahren zum Herstellen eines Bauteils, einer Friktionsscheibe, Scheiben- oder Tellerbremse nach einem der Ansprüche 1 bis 7, **dadurch gekennzeichnet**, daß das Bauteil, die Friktionsscheibe, Scheiben- oder Tellerbremse nach der mechanischen Nachbehandlung bei einer Temperatur von mehr als 1.100°C während mindestens 5 Stunden thermisch geätzt wird.

9. Verfahren zum Herstellen eines Bauteils, einer Friktionsscheibe, Scheiben- oder Tellerbremse nach einem der Ansprüche 1 bis 7, **dadurch gekennzeichnet**, daß das Bauteil, die Friktionsscheibe, Scheiben- oder Tellerbremse nach der mechanischen Nachbehandlung mittels konzentrierter Phosphorsäure, 5 bis 10%iger Flußsäure oder konzentrierter Schwefelsäure chemisch geätzt wird.

10. Verfahren nach Anspruch 9, **dadurch gekennzeichnet**, daß die chemische Ätzung während einer Zeit von 1 bis 15 Minuten bei Temperaturen von 20 bis 250°C durchgeführt wird.

11. Verfahren zum Falschdrallen von Synthesegarn unter Verwendung einer Friktionsfalschdrallvorrichtung, bei der die Ein- und Auslaufscheibe polierte Keramikscheiben sind und zwischen Ein- und Auslaufscheibe drei bis neun Friktionsscheiben nach einem der Patentansprüche 2 bis 7 angeordnet sind.

## Claims

1. Prefabricated part consisting of sintered, polycrystalline ceramic material, for use as a thread guide element or processing element, characterized in that
a) the surface of the prefabricated part has, at least at the regions provided for the thread contact, grain boundaries formed in a recessed manner and attainable through chemical or thermal etching and rounded free grain tips, with the chemical or thermal etching being carried out subsequent to the mechanical finishing and in that
b) this surface has a centre peak-to-valley height Ra of 0.3 to 1.5 µm.

2. Friction disc for an interlocking false twist friction device having discs and consisting of sintered, polycrystalline ceramics, characterized in that
a) the surface of the friction disc has, at least at the regions provided for the thread contact, grain boundaries formed in a recessed manner and attainable through chemical or thermal etching and rounded free grain tips, with the chemical or thermal etching being carried out subsequent to the mechanical finishing and in that
b) this surface has a centre peak-to-valley height Ra of 0.3 to 1.5 µm.

3. Brake disc or brake plate for textile machines consisting of sintered, polycrystalline ceramic material, characterized in that
a) the surface of the brake disc or brake plate has, at least at the regions provided for the thread contact, grain boundaries formed in a recessed manner and attainable through chemical or thermal etching and rounded free grain tips, with the chemical or thermal etching being carried out subsequent to the mechanical finishing and in that
b) this surface has a centre peak-to-valley height Ra of 0.3 to 1.5 µm.

4. Object according to one of claims 1 to 3; characterized in that it consists of aluminium oxide, zirconium oxide or a mixture of these materials.

5. Object according to one of claims 1 to 4, characterized in that it contains magnesium oxide, chromium oxide, manganese oxide, cobalt oxide and/or titanium oxide.

6. Object according to one of claims 4 or 5, characterized by a finishing which has been carried out by polishing and by a centre peak-to-valley height Ra of 1.1 to 1.3 µm.

7. Object according to one of claims 3 to 5, characterized by a finishing which has been carried out by lapping and by a centre peak-to-valley height Ra of 0.8 to 1.2 µm.

8. Method for producing a prefabricated part, a friction disc, brake disc or brake plate according to one of claims 1 to 7, characterized in that, after mechanical aftertreatment, the prefabricated part, the friction disc, brake disc or brake plate is thermally etched for at least 5 hours at a temperature of more than 1,100°C.

9. Method for producing a prefabricated part, a friction disc, brake disc or brake plate according to one of claims 1 to 7, characterized in that, after mechanical aftertreatment, the component part, the friction disc, brake disc or brake plate is chemically etched by means of concentrated phosphoric acid, 5 to 10% hydrofluoric acid or concentrated sulphuric acid.

10. Method according to claim 9, characterized in that the chemical etching is carried out for 1 to 15 minutes at temperatures of 20 to 250°C.

11. Method for false twisting synthetic yarn with the use of a false twist friction device, where the feed side and discharge discs are polished ceramic discs and three to nine friction discs according to one of claims 2 to 7 are arranged between the feed side and discharge discs.

## Revendications

1. Elément en céramique polycristalline frittée destiné à être utilisé comme élément guide fil ou comme élément de traitement, caractérisé par le fait que
a) au moins dans les zones prévues pour le contact du fil, la surface de l'élément présente des joints de grains creusés par attaque chimique ou thermique et des angles dégagés de grains arrondis, l'attaque chimique ou thermique étant réalisée à la suite de l'usinage mécanique et par le fait que
b) ladite surface présente une rugosité moyenne Rₐ de 0,3 à 1,5 µm.

2. Disque de friction en céramique polycristalline frittée pour un dispositif de fausse torsion par friction pourvu de disques qui s'engagent l'un dans l'autre, caractérisé par le fait que
a) au moins dans les zones prévues pour le contact du fil, la surface du disque de friction présente des joints de grains creusés par attaque chimique ou thermique et des angles dégagés de grains arrondis, l'attaque chimique ou thermique étant réalisée à la suite de l'usinage mécanique et par le fait que
b) ladite surface présente une rugosité moyenne Rₐ de 0,3 à 1,5 µm.la surface du disque de friction.

3. Frein à disque ou à plateau en céramique polycristalline frittée pour machines textiles, caractérisé par le fait que
a) au moins dans les zones prévues pour le contact du fil, la surface des freins à disque ou à plateau présente des joints de grains creusés par attaque chimique ou thermique et des angles dégagés de grains arrondis, l'attaque chimique ou thermique étant réalisée à la suite de l'usinage mécanique et par le fait que
b) ladite surface présente une rugosité moyenne Rₐ de 0,3 à 1,5 µm.la surface du disque de friction.

4. Objet selon l'une des revendications 1 à 3, caractérisé par le fait qu'il est constitué d'oxyde d'aluminium, d'oxyde de zirconium ou d'un mélange de ces matériaux.

5. Objet selon l'une des revendications 1 à 4, caractérisé par le fait qu'il contient de l'oxyde de magnésium, de l'oxyde de chrome, de l'oxyde de manganèse, de l'oxyde de cobalt et/ou de l'oxyde de titane.

6. Objet selon l'une des revendications 4 ou 5, caractérisé par un usinage par polissage et une rugosité moyenne Rₐ comprise entre 1,1 et 1,3 µm.

7. Objet selon l'une des revendications 3 à 5, caractérisé par un usinage par rodage et une rugosité moyenne Rₐ comprise entre 0,8 et 1,2 µm.

8. Procédé de fabrication d'un élément, d'un disque de friction, d'un disque ou d'un plateau de frein selon l'une des revendications 1 à 7, caractérisé par le fait qu'après l'usinage mécanique, on soumet l' élément, le disque de friction, le disque ou le plateau de frein à une attaque thermique sous une température supérieure à 1100 °C pendant 5 heures au moins.

9. Procédé de fabrication d'un élément, d'un disque de friction, d'un disque ou d'un plateau de frein selon l'une des revendications 1 à 7, caractérisé par le fait qu'après l'usinage mécanique, on soumet l' élément, le disque de friction, le disque ou le plateau de frein à une attaque chimique avec de l'acide phosphorique concentré, de l'acide fluorhydrique dosé à 5 à 10 % ou de l'acide sulfurique concentré.

10. Procédé selon la revendication 9, caractérisé par le fait que l'attaque chimique est réalisée pendant une durée allant de 1 à 15 minutes sous des températures allant de 20 à 250 °C.

11. Procédé pour donner une fausse torsion à des fils synthétiques utilisant un dispositif de fausse torsion par friction, dans lequel le disque d'entrée et le disque de sortie sont des disques en céramique polis et que trois à neuf disques de friction selon l'une des revendications 2 à 7 sont disposés entre le disque d'entrée et le disque de sortie.
